# EUROPEAN PATENT APPLICATION

(11) **EP 0 929 053 A1**
(43) Date of publication of application: **14.07.1999**
(21) Application number: 98310735.0
(22) Date of filing: 24.12.1998
(51) Int. Cl.: G07F 7/08, G06K 19/073

(54) **Device for detecting the acceptibility of a data-bearing card**

(30) Priority: 06.01.1998 GB 9800109
(71) Applicant: NCR INTERNATIONAL INC., Dayton, Ohio 45479 (US)
(72) Inventor: Mitchell, Thomas, Fort Collins, CO 80525 (US)
(74) Representative: Cleary, Fidelma

(57) **Abstract**

A terminal such as an ATM (10) operated by a magnetic stripe card or a smart card is provided with a detector (30) to sense cracks or distortions of the card (3). A transmitter (5) and receiver(6) are positioned so that radiation is transmitted through or reflected from the card. If the received signal differs from a preset level, indicating an unacceptable card, the card is returned to the user and does not enter the card read head (36).

## Description

This invention relates to a device for detecting the acceptability or otherwise of a data-bearing card. Such cards may carry magnetic data in the form of authorisation data for use with a self-service financial terminal, for example, an automated teller machine (ATM), or may be data on other forms of magnetic stripe card. The data may also be in the form of integrated circuitry associated with a "Smart Card" or electronic purse.

Such cards are usually made from a plastics material and have a limited life expectancy. Not infrequently cards become bent or cracked due principally to the way they are kept in a wallet or purse by an owner. Cracked, bent or otherwise distorted and damaged cards may become jammed in a card reader of an ATM or may be falsely captured by the ATM. These occurrences would cause inconvenience not only to the card owner - a customer of a bank - but in the case of jamming, an ATM would be rendered temporarily out of service until the jam had been cleared by a servicing engineer.

It is an object of this invention to provide a device which prevents a card becoming jammed or falsely captured.

According to the present invention a detection device for detecting the acceptability of a data-bearing card, characterized by receiving means for receiving the card, means for detecting the physical condition of the card, and means for rejecting an unacceptable card.

The means for detecting the physical condition of a card may comprise a signal transmitter and a signal receiver pair disposed so that a signal emitted by the transmitter is directed at the card upon receipt of the card by the detection device and the signal present at the receiver securing to recognise any irregularity in the card and, thereby, its acceptability. Irregularities in a card include regions of weakness, breaks, cracks and wear which may affect the physical condition of the card *per se* as well as identification data carried by the card.

Preferably, the signal transmitter and receiver pair are mounted in the detector so that the card is passed therebetween. Alternatively, the signal transmitter/receiver pair are mounted adjacent each other and facing one major face of a card. Where the signal transmitter/signal receiver pair is mounted to face one major face of a card, the detecting device includes a signal reflecting platen over which the card is passed and disposed to reflect the emitted signal to the receiver. The signal reflecting platen may constitute a flat form for supporting the card when the card is placed in the card receiving means. The extent of damage, whatever the cause, to a card can be determined from a comparison of the relative signal strengths of the signal emitted by the transmitter and signal received by the receiver. In the event that a card is severely damaged, for example, if a deep crack or if a break is detected, the damaged card is rejected before either the identification data on the card is read by the ATM or before the card is fully accepted into the ATM so that an intended transaction cannot proceed. Ultrasonic, X-ray or optical type transmitters and receivers may be used.

The detection device according to the invention detects damage to plastic bank and other cards and decides upon further appropriate action, for example, total rejection of a card. Where a damage is, nevertheless, acceptable, the detection device may include a warning system to alert a customer that the card is nearing the end of its useful life and must not be used again, necessitating replacement from the issuing authority, for example a bank. Similarly, where a damaged card is rejected without completion of an intended transaction, the warning system would also alert the customer.

It will be appreciated that a detection device according to the present invention reduces the risk of an ATM or other machine having to be taken out of service due to a severely damaged card becoming jammed in a card reader.

The detection device according to the present invention may be constructed as an accessory for attachment to an existing ATM or other machine or may be incorporated within production machines.

Also according to the invention a method of operating a self-service terminal by a data-bearing card characterized by the steps of:
a) sensing the acceptability of the card; and
b) if the card is unacceptable, rejecting the card or
c) if the card is acceptable, permitting the initiation of a self-service transaction.

A detection device according to the invention will now be described by way of example, with reference to the accompanying drawings in which:-
Figure 1 is a view of an ATM having a card reader;
Figure 2 shows a control system for an ATM;
Figure 3 is a vertical section through a first embodiment of a card reader according to the invention; and
Figure 4 is a section through a second embodiment

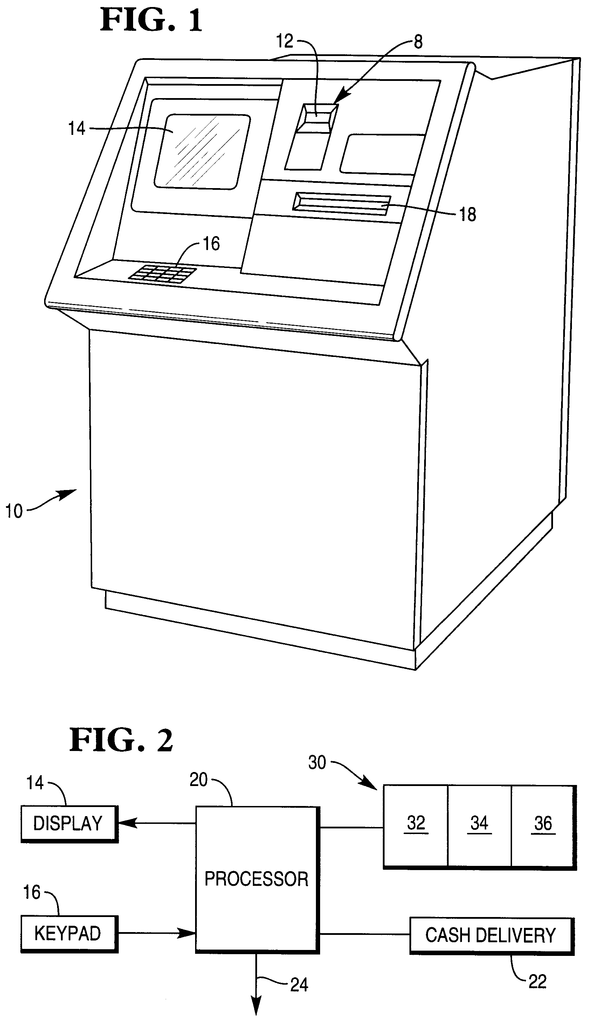

Figure 1 shows an ATM 10 having a magnetic card input slot 12, a display screen 14, a keypad 16, and a cash delivery slot 18.

The control system for the ATM 10 is shown in Figure 2, in which a processor 20 is connected to receive input from the keypad 16, to control the display 14, and to control a cash counting and delivery system 22 connected to the cash delivery slot 18. The processor is connected by a connection 24 to the central authorisation system of the financial institution operating the ATM 10.

A card reader 30 according to the invention is also connected to the processor 20, the card reader 30 having a standard data read head 32, standard mechanical drive 34 to drive a card into or out of the reader 30, and a card damage detector 36.

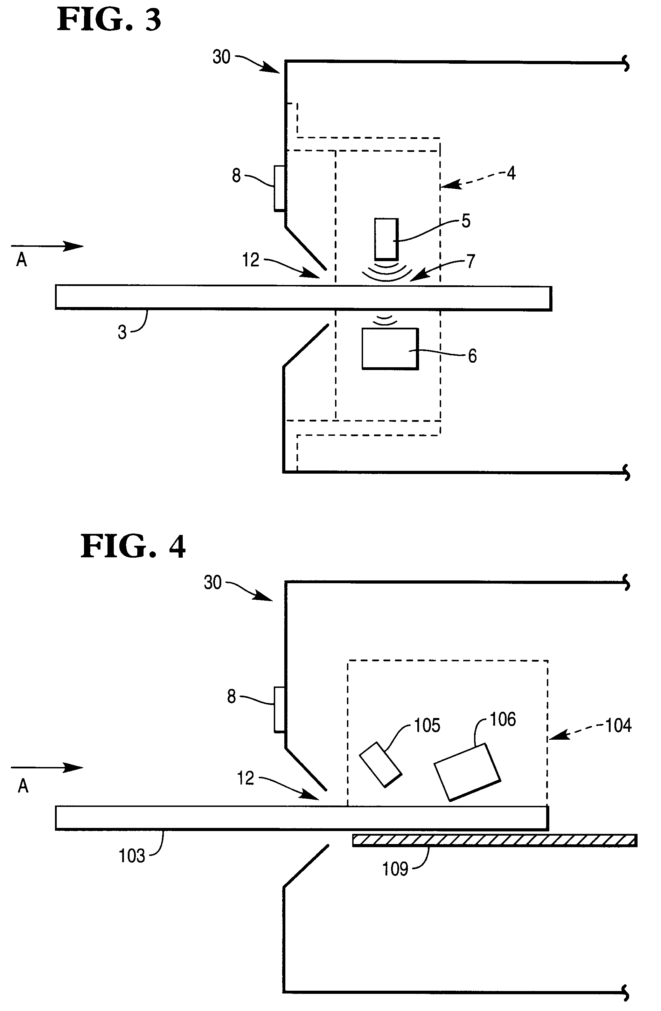

The card reader 30 is shown in part in Figure 3. The reader has an entry slot 12 for receiving a plastic bank card 13, which is driven into the reader in the direction of the arrows A by the drive 34 (not shown in Figure 3) and into the data read head 36 (not shown in Figure 3).

A card damage detector 4 is mounted just inside the entry slot 12 and in the path of the card 3 as indicated. The card damage detector 4 includes a signal transmitter 5 and a signal receiver 6. Ultrasonic, X-ray or optical type transmitters and receivers may be used. The processor 20 is arranged to store a value corresponding to a maximum signal received from the transmitter 5 by the receiver 6 which indicates a perfect or only slightly damaged card; any received signal higher than that maximum indicates a card which is unacceptable and which could not be read by the card reader.

If the bank card 3 is cracked as indicated at 7, the amount of signal or signal characteristic present at the receiver as the crack in the card traverses the path of a signal between the transmitter and the receiver exceeds the preset maximum. The processor 20 therefore instructs the drive 34 to drive the card 3 out of the slot 12. If the maximum is not exceeded, the processor 20 permits the card to be driven into the data read head 32..

A warning light 8 is located in a prominent position to indicate the acceptability or otherwise of the bank card to the customer seeking to make a transaction. If preferred, information regarding the acceptability or otherwise of a card may be displayed on an existing screen normally present in an ATM and under the control of the operational parameters of the ATM; such a display may be additional to or alternative to the warning light 8.

An alternative arrangement of a card damage detector 104 is shown in Figure 4. In this arrangement the signal transmitter 105 and signal receiver 106 are arranged on the same side of the card 103, and on the opposite side of the card is a signal-reflecting platen 109 which supports the card. In this arrangement a crack in the card 103 causes a reduction in the strength of the signal received by receiver 106, and the processor 20 is arranged to contain a predetermined minimum signal strength; a received signal lower than the minimum indicates a unacceptable card.

## Claims

1. A detection device for detecting the acceptability of a data-bearing card (3) characterized by receiving means (12) for receiving the card, means (5,6) for detecting the physical condition of the card, and means (20,34) for rejecting an unacceptable card.

2. A detection device according to claim 1 wherein the means for detecting the physical condition of the card comprises a signal transmitter (5) and a signal receiver (6) disposed so that a signal emitted by the transmitter is directed at the card upon receipt by the receiving means (12) and the signal present at the receiver is representative of any irregularity of the physical condition of the card.

3. A detection device according to claim 2 wherein the signal transmitter (5) and the signal receiver (6) are mounted in the device so that a received card (3) is passed between them.

4. A detection device according to claim 2 wherein the signal transmitter (105) and receiver (106) are mounted adjacent each other and facing one major face of a received card (103), the device further comprising a signal reflecting platen (109) over which the received card is passed and which reflects the signal from the transmitter to the receiver.

5. A detection device according to anyone of claims 2, 3 or 4 wherein the presence of any irregularity of the physical condition of a card is determined by means for comparing the relative signal strengths of the signal emitted by the transmitter and the signal received by the receiver.

6. A detection device according to any preceding claim including a warning indicator (8) which operates to indicate to a customer when a card is unacceptable.

7. A self-service terminal operable by a data-bearing card characterized by comprising a detection device according to any one of claims 1 to 6.

8. A self-service terminal according to claim 7 in which the detection device is positioned so that the acceptability of the card is determined prior to initiation of a self-service transaction.

9. A method of operating a self-service terminal by a data-bearing card characterized by the steps of:
a) sensing the acceptability of the card; and
b) if the card is unacceptable, rejecting the card or
c) if the card is acceptable, permitting the initiation of a self-service transaction.
